# EUROPEAN PATENT APPLICATION

(11) **EP 1 767 418 A2**
(43) Date of publication of application: **28.03.2007**
(21) Application number: 06019400.8
(22) Date of filing: 15.09.2006
(51) Int. Cl.: B60S 3/04

(54) **Vehicle wash system**

(30) Priority: 22.09.2005 ES 200502302; 25.10.2005 ES 200502589
(71) Applicant: Malagrida Matons, Javier, 08034 Barcelona (ES)
(72) Inventor: Malagrida Matons, Javier, 08034 Barcelona (ES)
(74) Representative: Duran Benejam, Maria del Carmen

(57) **Abstract**

This system comprises a fixed bridge (1) bearing the appropriate mechanisms for washing vehicles, that may or may not come into contact with the vehicle, placed over a track (2) that has no mechanisms for pulling along the vehicles to be washed. A set of luminous signals (3) is laid out along that track to tell the driver of the vehicle when to stop and when to move forwards along the track (2), regulating the speed at which he moves forwards. The signals (3) are controlled by a control device or PLC (4). The system has a series of sensors (5) laid out along the track (2), which are connected to the control device (4), for detecting the position of the vehicles that are moving along the track (2).

## Description

### Object of the invention

The present invention refers to a vehicle wash system, of the type that comprises a fixed bridge containing the appropriate mechanisms for washing vehicles, which may or may not come into contact with the vehicle, and a lane or track underneath the bridge, along which the vehicles pass through to be washed.

### Background to the invention

There are currently many different systems and devices available for washing vehicles, removing the dirt from vehicle bodies and improving their general appearance. Many of these systems are on offer to the public at large, for use after first paying for the services provided. These systems operate under totally automatic conditions or may be operated by hand.

One example are what are known as wash "boxes" in which there is a pistol that sprays soapy water and pressurised water so that users can wash their vehicles. In this example, the users wash their vehicles themselves, with the need to spend considerable time performing the operation, with the ensuing risk of getting wet or stained.

Another system is the vehicle wash system in which users leave their vehicles in a specific area, where a moving bridge moves lengthwise. This moving bridge has a series of mechanisms for washing the vehicle, that may or may not come into contact with the vehicle. In the first case the moving bridge has mechanisms for spraying water and soap, and rollers or fabric strips that rub the body of the vehicle, while in the second case, the moving bridge has no rollers or fabric strips and applies onto the vehicle soap, liquid additives, pressurised water or other appropriate fluids to clean the bodywork, but without rubbing it with textile elements.

The moving bridge performs one or two functions during each run. However, these systems are fragile and costly, as the washing and supply fixtures are hung from a moving bridge. During each wash, the bridge has to move several times along rails, and travelling along the whole length of each vehicle in every run. Even though the cleaning time is shortened using these washing bridges, they still need a certain length of time to travel up and down the whole vehicle several times.

There are also vehicle wash tunnels, formed by a bridge that is fixed to a lane or track where the vehicles enter the tunnel at one end and emerge from the other end after being washed. This bridge contains all the necessary means for washing the vehicle, with and without touching the vehicle, as well as the elements necessary to spray water onto the body, such as jets, mechanisms for applying soap or detergent and as an option, a set of rollers or fabric strips that rub the vehicle body. At the end where the vehicles leave the vehicle wash tunnels, there are systems for rinsing off the soap and drying the vehicles by means of blowing air onto the vehicle. The vehicle moves forwards inside the tunnel by means of a chain that pulls it along in which one of the vehicle's wheels is inserted, moving it forwards. These tunnels are extremely complicated to install and require considerable maintenance. In addition, they entail a large consumption of water and electricity. Their advantages lie in the fact that they are highly automated and are capable of washing a higher number of vehicles per hour, since several vehicles can be washed simultaneously, distributed at each station along the tunnel, but the washing of one vehicle requires a considerable length of time.

### Description of the invention

The vehicle wash system presented in this invention has a series of technical peculiarities that are aimed at achieving; greater: simplicity in terms of construction, with less manufacturing costs. For this reason it has no mechanisms for pulling the vehicle along and no drying mechanisms; washing the vehicle takes up far less time and is more economical since users drive their own vehicles slowly through the fixed bridge facility, powered by the vehicle engine, which makes it possible to cut down on operating expenses by reducing the system operating power, precisely due to eliminating the mechanisms for drying the vehicle and moving it along.

This system, which is formed by a fixed bridge laid out over a lane or track along which the vehicle to be washed is driven, includes a set of luminous signals distributed along the bridge or track, connected to a control device or PLC. The luminous signals tell the vehicle driver when to stop and when to move forwards along the wash track, so that the vehicle always moves along at the right speed to ensure it is washed properly.

The vehicle moves along the wash track powered by its own engine, and unlike what occurs with traditional washing tunnels, the track has no mechanisms in place for pulling the vehicle along.

The device responsible for the control of the luminous signals is preferably a PLC (programmable logical controller), that activates the programmed successive luminous signals in such a way that the vehicle takes a certain time to move along the wash track, and the luminous signals authorise the next vehicle in line to pass through the wash track, once the previous vehicle approaches the exit.

As an option, the system could have a series of sensors at intervals along the track, for detecting the position of the vehicle. These sensors are connected to the control that operates the luminous signals. In this case activating the luminous signals by the control device is done, depending on the position of the vehicle or vehicles moving along the track.

These luminous signals may be traffic lights laid out along the track, so that the driver moves along intuitively, depending on the signals already received, since the sequence of these signals is similar to the one used on roads: for example, red to indicate the need to stop or slow down, and green to let the driver know he can move forwards along the track.

The system could have a system for spraying de-mineralised water at the bridge exit, as the final washing mechanism, to enable the vehicle to dry more quickly as it is driven along the road. De-mineralised water does not leave stains or marks on the vehicle body when it dries, giving it a perfect shine. In addition, the system is more economical than drying with air, thereby ensuring an important reduction in electricity consumption and cuts system assembly and maintenance costs.

As an option, the washing system could have an end station for rinsing, waxing and rinsing with de-mineralised water at the track exit. This station has a grille of pipes connected to each other with a great many holes or openings for spraying liquids over the whole of the vehicle parked at that station.

The conduits in the grille are connected to ensure the alternating, sequential supply of water, water with wax additives and de-mineralised water, all of which are sprayed in turn over the vehicle parked at this end station.

The aforementioned grille is mounted on the fixed bridge and, like the end station in the wash system, has a larger surface than the vehicles to be washed, enabling different liquids to be sprayed in turn over the whole of the vehicle parked at that end station.

To ensure the vehicle stops at the end station for sufficient time for it to be sprayed with the rinsing water, water containing the wax additives and de-mineralised water, one of the luminous signals will inform the driver whether or not he can move along the track, at the exit of the end station described above.

This system speeds up the washing operation, as the vehicle moves along inside the bridge, powered by its own engine and driven by the user, and is also more economical, since the system has no mechanisms that consume additional electricity, such as the air dryer and the device that moves the vehicle along, in addition to the fact that it ensures easier maintenance of the facility, which may be fully automatic.

### Description of the figures

To complete the description given above and for the purpose of making the features of the invention easier to understand, a set of drawings is attached to this descriptive dossier, showing the following, as an illustrative guide that is by no means exhaustive:
- Figure 1 shows an elevation view of an example of how the system works, in lengthwise cross-section, and in this case, fitted with sensors to detect the vehicle's position, and textile strips for rubbing the bodywork; at the exit, there are a series of mechanisms for spraying rinsing water and de-mineralised water in the form of a curtain.
- Figure 2 shows a plan view of the system referred to in figure 1, while a vehicle is being washed.
- Figure 3 shows a block diagram of the control device that is connected to the luminous signals and sensors.
- Figure 4 shows an elevation view of a variation of the system, in lengthwise cross-section, fitted with a grille at the exit zone, for the successive spraying over the whole vehicle of rinsing water, water containing wax additives and de-mineralised water.
- Figure 5 shows a diagrammatic plan view of the system referred to in the preceding figure, while a vehicle is being washed.
- Figure 6 shows a profile view of the end station for rinsing, waxing and rinsing with de-mineralised water, shown in figures 4 and 5.

### Preferred operation of the Invention

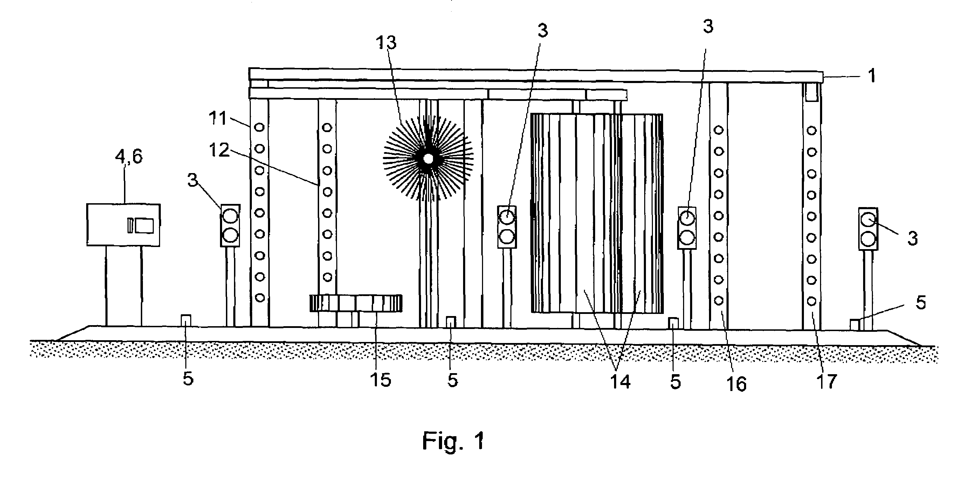

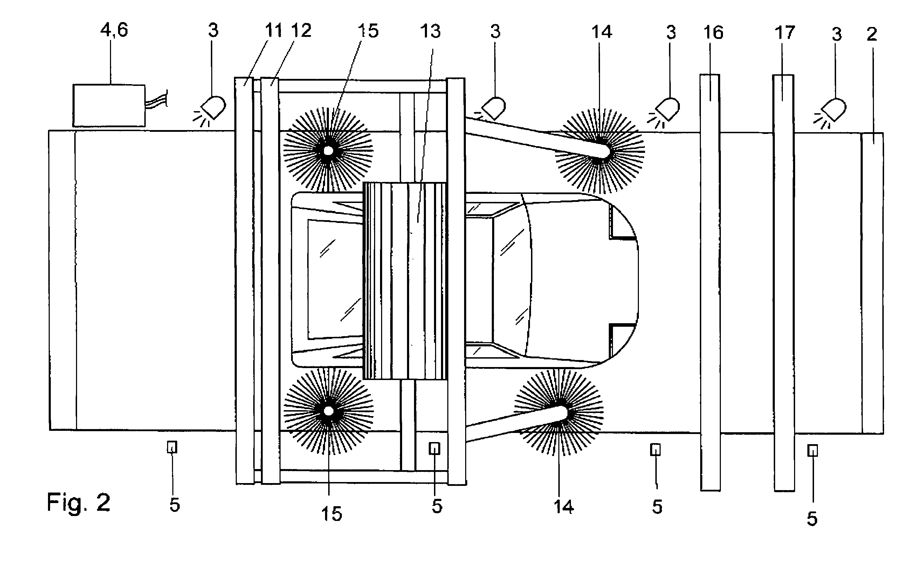

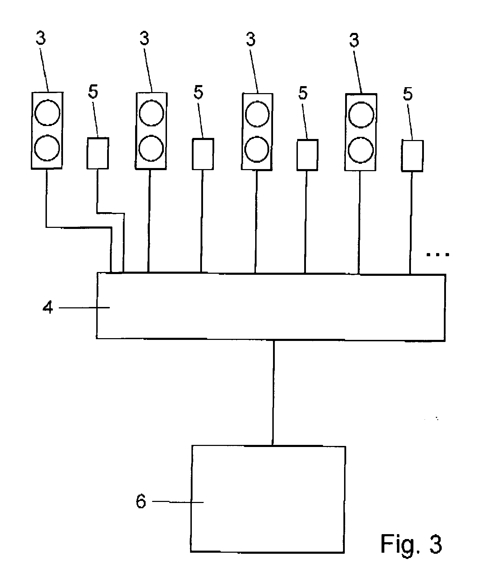

In the production example shown in figures 1 to 3, the system is formed by a fixed bridge (1) placed over a track (2) along which the vehicle to be washed is driven. This track is not fitted with any (2) mechanisms that pull the vehicle along and the vehicle is powered by its own engine.

In this example of how the invention works, the bridge (1) has a set of devices for washing the vehicle through coming into contact with it, consisting of a first set of mechanisms (11) for spraying water onto the body of the vehicle, a set of mechanisms (12) that apply detergent, some mobile textile rollers (13, 14, 15) to clean the upper surface, sides and wheels of the vehicle respectively, a set of mechanisms (16) for spraying rinsing water and a set of mechanisms (17) for spraying de-mineralised water, which leaves no stains or marks on the bodywork, as the vehicle dries after being driven along the road after the wash operation.

Among the different washing mechanisms or devices (11 to 17) placed on the bridge (1) are some luminous signals (3), for example, traffic lights, to let the driver know when to stop or start moving again, as he drives along the track (2), thereby modifying the movement of the vehicle through the facility.

These luminous signals (3) are connected to a control device (4), for example a PLC, which can activate successive programmed signals, so that the vehicle takes a certain length of time to travel along the track (2) or, as shown in the example contained in the figures, activate the luminous signals in a controller manner, depending on the information furnished by a set of sensors (5) which detect the vehicle's position on the track (2).

In this second case, if a vehicle stops on the track (2), the control device (4) will activate the luminous signals behind that vehicle, and activate the luminous signal that prohibits other vehicles from moving forwards until the track is free.

The control device (4) is also connected to the mechanism (6) that starts up and stops the cleaning mechanisms (11 to 17) on the bridge (1) and to a prepaid machine that automatically makes the system start up controlled by the PLC. In the operation shown in figures 1 to 3, the mechanisms (16, 17) that spray rinsing water and de-mineralised water take are in the form of a bridge, fitted with many different spraying devices aimed at the area where the vehicle passes along, spraying rinsing water and de-mineralised water in the form of curtains.

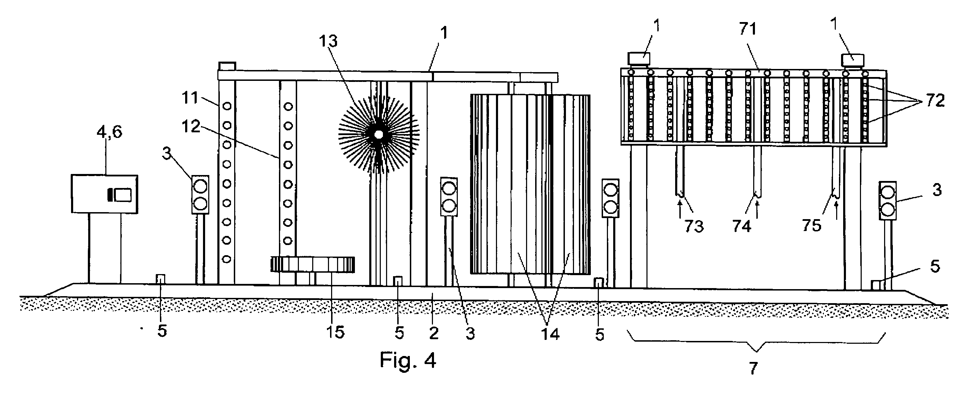

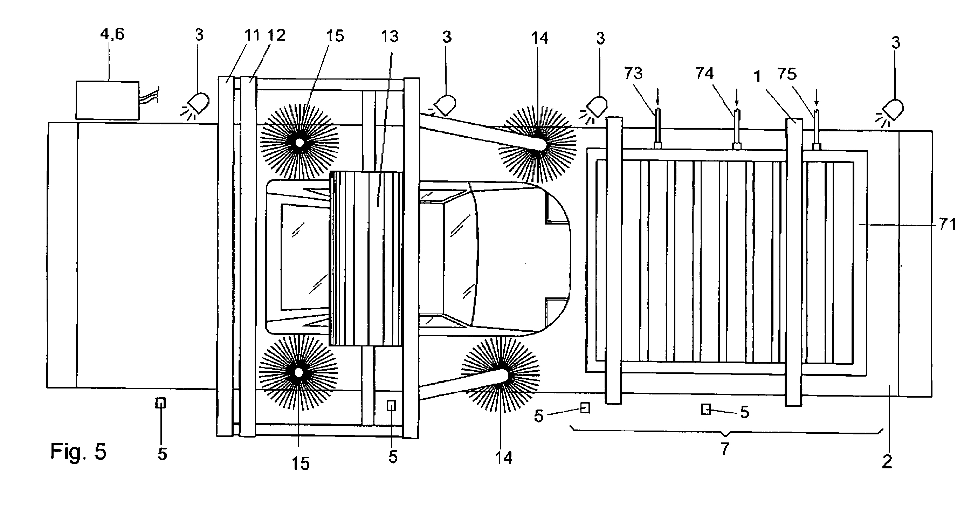

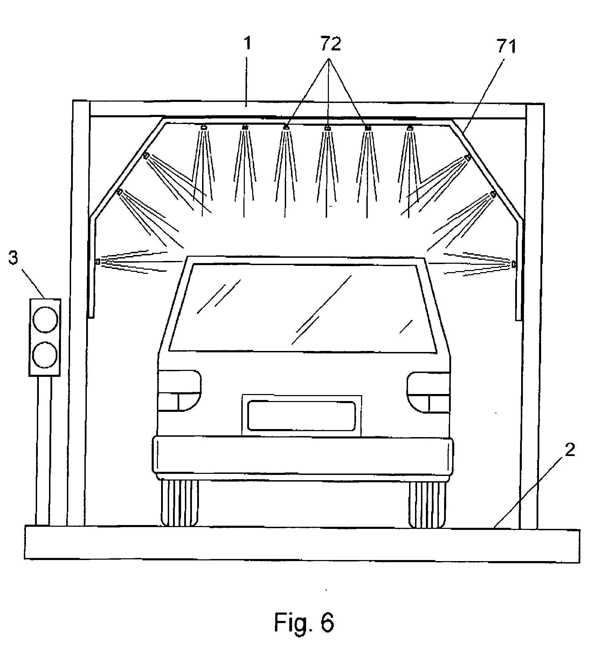

As an option, and as shown in figures 4 to 6, the system could have a single station at the exit (7) for rinsing, waxing and rinsing again with de-mineralised water. This end station (7) has a grille (71) of tubular elements connected to each other, fitted with many holes or openings (72) for spraying liquids onto the whole of the vehicle parked at that station.

A set of conduits (73, 74, 75) are connected to the grille (71) for alternately spraying rinsing water, water containing wax additives and de-mineralised water in sequence and these liquids are sprayed in succession onto the vehicle in the end station described above (7).

The grille (71) is mounted on the fixed bridge (1) and has a surface that is larger than the vehicles to be washed. The grille (71) sprays the liquids onto the entire vehicle, while it is parked at the end station described above (7).

To ensure the vehicle remains parked in the end station (7) during the time necessary for rinsing, waxing and rinsing again with de-mineralised water at the exit of that end station (7) a set of luminous signals (3) is in place, to tell the driver when he can leave that station (7).

Having described the nature of the invention in sufficient detail, and given an example of preferred operation, it is hereby recorded for the opportune purpose that the materials, shape, size and lay-out of the elements described in the preceding paragraphs may be modified, as long as this does not entail any alteration in the essential features of the invention that are being claimed herein.

## Claims

1. A vehicle wash system, of the type that comprises a fixed bridge (1) placed over a track (2) along which the vehicles to be washed move, this bridge (1) having a series of mechanisms for washing the vehicles that may or may not come into contact with the vehicle, **characterised by** the fact that it has a set of luminous signals (3) laid out along a track (2) that has no mechanisms for pulling the vehicle along, and a control device (4) that performs selective control over the luminous signals (3) to tell the driver when to stop and when to move forwards along the track, by means of luminous signals.

2. A system as described in claim 1, **characterised by** the fact that it has a series of sensors (5) laid out along the track (2) to detect the position of the vehicles moving along that track (2), and also by the fact that those sensors (5) are connected to the control device (4) that controls the luminous signals (3) and the system operation.

3. A system as described in claims 1 or 2, **characterised by** the fact that the luminous signals (3) consist of traffic lights.

4. A system as described in claim 1, **characterised by** the fact that the washing mechanisms (17) occupying the final position at the exit of the fixed bridge (1) consist of a series of devices that spray de-mineralised water to ensure that the vehicle dries faster without leaving any stains or marks on the body.

5. A system as described in claim 1, **characterised by** the fact that it consists of an end station (7) at the exit of the track (2) for rinsing, waxing and rinsing again with de-mitleralised water. This end station (7) has a grille (71) of pipes connected to each other, fitted with a great many holes and openings (72) for spraying liquids over the vehicle parked in that station; a set of conduits (73, 74, 75) are connected to that grille (71) for the alternate, sequential spraying of water, water containing wax additives and de-mineralised water which is sprayed in succession onto the vehicle parked in the end station described above (7).

6. A system, as described in claim 5, **characterised by** the fact that the grille (71) is mounted on the fixed bridge (1).

7. A system, as described in claim 5, **characterised by** the fact that both the end station (7) and the grille (71) have a surface that is larger than the vehicles to be washed, and this grille (71) sprays liquid all over the entire vehicle.

8. Improvements, as described in claim 1, **characterised by** the fact that one of the luminous signals (3) is placed at the exit of the end station (7).
